# EUROPEAN PATENT APPLICATION

(11) **EP 4 048 000 A1**
(43) Date of publication of application: **24.08.2022**
(21) Application number: 20894961.0
(22) Date of filing: 04.12.2020
(51) Int. Cl.: H04W 68/00, H04W 68/02, H04W 88/06

(54) **PAGING METHOD AND APPARATUS**

(30) Priority: 06.12.2019 CN 201911243782
(71) Applicant: Huawei Technologies Co., Ltd., Shenzhen, Guangdong 518129 (CN)
(72) Inventor: CAI, Yu, Shenzhen, Guangdong 518129 (CN); JIN, Hui, Shenzhen, Guangdong 518129 (CN); YAO, Chuting, Shenzhen, Guangdong 518129 (CN); WANG, Jian, Shenzhen, Guangdong 518129 (CN)
(74) Representative: MERH-IP Matias Erny Reichl Hoffmann Patentanwälte PartG mbB
(86) International application number: PCT/CN2020/133791
(87) International publication number: WO 2021/110118

(57) **Abstract**

This application provides a paging method and apparatus. The paging method can be applied to a terminal device. The terminal device includes a first subscriber identity module SIM card and a second SIM card. The first SIM card is served by a first device, and the first SIM card camps on a cell of a second device. The method includes: The terminal device receives a first message sent by the first device or the second device, where the first message is used to indicate to page the second SIM card. The terminal device initiates a random access procedure based on the first message by using the second SIM card. The paging method in embodiments of this application helps avoid a paging loss of the terminal device, and shorten a delay generated when the terminal device receives downlink data or sends uplink data.

## Description

This application claims priority to Chinese Patent Application No. 201911243782.0, filed with the China National Intellectual Property Administration on December 6, 2019 and entitled "PAGING METHOD AND APPARATUS", which is incorporated herein by reference in its entirety.

### TECHNICAL FIELD

This application relates to the communications field, and more specifically, to a paging method and apparatus.

### BACKGROUND

A multi-card terminal device is a terminal device into which two or more telephone cards (subscriber identity module (subscriber identity module, SIM) cards or universal subscriber identity module (universal subscriber identity module, USIM) cards) are inserted. The multi-card terminal device may register with a network by using two or more telephone cards. In consideration of costs, some multi-card terminal devices can receive data or signaling from a network of only one card at a same moment. These terminal devices are referred to as single-receiver multi-card terminals herein.

If at least two telephone cards of a single-card multi-receiver terminal device are in an idle state, the terminal device can listen to paging of only one card on a paging occasion (paging occasion, PO) of the card. In this case, if a network of another card whose PO overlaps the PO of the card sends paging to the terminal device, the terminal device does not receive the paging for the card. In this case, a paging loss occurs, resulting in a delay generated when the terminal device receives downlink data or sends uplink data.

### SUMMARY

This application provides a paging method, to help avoid a paging loss of a terminal device, and shorten a delay generated when the terminal device receives downlink data or sends uplink data.

According to a first aspect, a paging method is provided. The paging method is applied to a terminal device. The terminal device includes a first subscriber identity module SIM card and a second SIM card. The first SIM card is served by a first device, and the first SIM card camps on a cell of a second device. The method includes: The terminal device receives a first message sent by the first device or the second device, where the first message is used to indicate to page the second SIM card. The terminal device initiates a random access procedure based on the first message by using the second SIM card.

In embodiments of this application, when the terminal device can receive signaling or data by using only the first SIM card, a network may add, to the signaling or the data sent to the first SIM card, indication information for paging the second SIM card. In this way, the terminal device can determine, based on the signaling or the data sent to the first SIM card, that the network pages the second SIM card. This avoids a paging loss, and shortens a delay generated when the terminal device receives downlink data or sends uplink data by using the second SIM card.

With reference to the first aspect, in some implementations of the first aspect, the first message includes information used to indicate an identifier of the second SIM card, or the first message includes information used to indicate an identifier of the first SIM card and first indication information, and the first indication information indicates that the first message is used to page the second SIM card.

In embodiments of this application, a network device adds the identifier of the second SIM card or the identifier of the first SIM card and the indication information to a paging message sent to the first SIM card of the terminal device, so that the terminal device can clarify that the paging message is a paging message for paging the second SIM card. This helps avoid a paging loss of the second SIM card, and shorten a delay generated when the terminal device receives downlink data or sends uplink data by using the second SIM card.

In some possible implementations, the first message is a paging message.

With reference to the first aspect, in some implementations of the first aspect, that the terminal device receives a first message sent by the first device or the second device includes: When the first SIM card is in a connected state, the terminal device receives a radio resource control RRC message or a media access control control element MAC CE sent by the second device.

In embodiments of this application, when the first SIM card of the terminal device is in a connected state, the terminal device may receive, by using the RRC message or the MAC CE, a paging indication for paging the second SIM card. In this way, the paging indication for paging the second SIM card is added to an existing message sent to the first SIM card, so that a paging loss can be avoided, and signaling overheads on an air interface can be reduced.

With reference to the first aspect, in some implementations of the first aspect, that the terminal device receives a first message sent by the first device or the second device includes: When the first SIM card is in a connected state or an inactive state, the terminal device receives the first message sent by the first device.

In embodiments of this application, when the first SIM card of the terminal device is in a connected state or an inactive state, the terminal device may directly receive, from the first device, the first message used to indicate to page the second SIM card. Compared with using a paging message for indication, this can avoid a paging loss, and shorten a delay generated when the terminal device receives downlink data or sends uplink data by using the second SIM card.

In some possible implementations, the first message is a notification message.

With reference to the first aspect, in some implementations of the first aspect, the first message further includes information used to indicate an identifier of the second SIM card.

In embodiments of this application, when the terminal device includes a plurality of SIM cards, the first message may further carry the information used to indicate the identifier of the second SIM card. This helps the terminal device clarify a paging message of a specific SIM card to which the first message is specific, to avoid a paging loss, and shorten a delay generated when the terminal device receives downlink data or sends uplink data by using the second SIM card.

According to a second aspect, a paging method is provided. The paging method includes: A first device receives a first message sent by a second device, where the first message is used to indicate to page a first SIM card of a terminal device, the terminal device further includes a second SIM card, the second SIM card camps on a cell of the first device, and the second SIM card is served by the second device. The first device sends the first message to the terminal device.

In some possible implementations, the first device may be an access network device, and the second device may be a mobility management function network element or a mobility management entity.

With reference to the second aspect, in some implementations of the second aspect, the first message includes information used to indicate an identifier of the first SIM card, or the first message includes information used to indicate an identifier of the second SIM card and first indication information, and the first indication information is used to indicate that the first message is used to page the first SIM card.

With reference to the second aspect, in some implementations of the second aspect, the first message further includes a paging parameter of the first SIM card.

With reference to the second aspect, in some implementations of the second aspect, when the second SIM card is in an idle state, the first message further includes a paging parameter of the second SIM card.

With reference to the second aspect, in some implementations of the second aspect, when the second SIM card is in a connected state, the first message includes information used to indicate an identifier of the second SIM card.

With reference to the second aspect, in some implementations of the second aspect, the first message further includes information used to indicate an identifier of the first SIM card.

According to a third aspect, a paging method is provided. The method includes: A first device receives a first message sent by a second device, where the first message includes information used to indicate an identifier of a first SIM card of a terminal device and information used to indicate an identifier of a second SIM card of the terminal device, the first SIM card is served by the first device, and the second SIM card is served by the second device. The first device sends a second message to a third device or the terminal device, where the second message is used to indicate to page the second SIM card, and the first SIM card camps on a cell of the third device.

In some possible implementations, the first device may be a first mobility management function network element or a first mobility management entity, the second device may be a second mobility management function network element or a second mobility management entity, and the third device may be an access network device. The first mobility management function network element or the first mobility management entity is configured to serve the first SIM card of the terminal device. The second mobility management function network element or the second mobility management entity is configured to serve the second SIM card of the terminal device.

With reference to the third aspect, in some implementations of the third aspect, the second message includes the information used to indicate the identifier of the second SIM card, or the second message includes the information used to indicate the identifier of the first SIM card and first indication information, and the first indication information indicates that the second message is used to page the second SIM card.

With reference to the third aspect, in some implementations of the third aspect, the second message further includes a paging parameter of the second SIM card.

With reference to the third aspect, in some implementations of the third aspect, when the first SIM card is in an idle state, the second message further includes a paging parameter of the first SIM card.

With reference to the third aspect, in some implementations of the third aspect, that the first device sends a second message to a third device or the terminal device includes: When the first SIM card is in a connected state, the first device sends the second message to the third device, where the second message includes the information used to indicate the identifier of the first SIM card.

With reference to the third aspect, in some implementations of the third aspect, that the first device sends a second message to a third device or the terminal device includes: When the first SIM card is in a connected state or an inactive state, the first device sends the second message to the terminal device.

With reference to the third aspect, in some implementations of the third aspect, the second message further includes the information used to indicate the identifier of the second SIM card.

According to a fourth aspect, a paging method is provided. The method includes: When a second device determines that a second SIM card of a terminal device needs to be paged, the second device sends a first message to a first device, where the first message includes information used to indicate an identifier of a first SIM card of the terminal device and information used to indicate an identifier of the second SIM card of the terminal device, the first SIM card is served by the first device, and the second SIM card is served by the second device.

In some possible implementations, the second device may be a first mobility management function network element or a first mobility management entity, and the first device may be a second mobility management function network element or a second mobility management entity. The first mobility management function network element or the first mobility management entity is configured to serve the first SIM card of the terminal device. The second mobility management function network element or the second mobility management entity is configured to serve the second SIM card of the terminal device.

With reference to the fourth aspect, in some implementations of the fourth aspect, the method further includes: When the second SIM card is in an inactive state, the second device receives a proxy paging message sent by a fourth device.

With reference to the fourth aspect, in some implementations of the fourth aspect, the proxy paging message may carry no content, or the proxy paging message carries indication information, where the indication information indicates to page the second SIM card.

According to a fifth aspect, a paging apparatus is provided. The paging apparatus includes a module configured to perform the paging method in any one of the first aspect or the possible implementations of the first aspect.

According to a sixth aspect, a paging apparatus is provided. The paging apparatus includes a module configured to perform the paging method in any one of the second aspect or the possible implementations of the second aspect.

According to a seventh aspect, a paging apparatus is provided. The paging apparatus includes a module configured to perform the paging method in any one of the third aspect or the possible implementations of the third aspect.

According to an eighth aspect, a paging apparatus is provided. The paging apparatus includes a module configured to perform the paging method in any one of the fourth aspect or the possible implementations of the fourth aspect.

According to a ninth aspect, a paging apparatus is provided. The apparatus may be the terminal device in the foregoing method designs, or may be a chip disposed in the terminal device. The apparatus includes a processor, coupled to a memory. The processor may be configured to execute indications in the memory, to implement the method performed by the terminal device in any one of the first aspect and the possible implementations of the first aspect. Optionally, the apparatus further includes a memory. Optionally, the apparatus further includes a communications interface, and the processor is coupled to the communications interface.

When the apparatus is the terminal device, the communications interface may be a transceiver or an input/output interface.

When the apparatus is the chip disposed in the terminal device, the communications interface may be an input/output interface.

According to a tenth aspect, a paging apparatus is provided. The apparatus may be the access network device in the foregoing method designs, or may be a chip disposed in the access network device. The apparatus includes a processor, coupled to a memory. The processor may be configured to execute indications in the memory, to implement the method performed by the access network device in any one of the second aspect and the possible implementations of the second aspect. Optionally, the apparatus further includes a memory. Optionally, the apparatus further includes a communications interface, and the processor is coupled to the communications interface.

When the apparatus is the access network device, the communications interface may be a transceiver or an input/output interface.

When the apparatus is the chip disposed in the access network device, the communications interface may be an input/output interface.

According to an eleventh aspect, a paging apparatus is provided. The apparatus may be the first mobility management function network element or the first mobility management entity in the foregoing method designs, or may be a chip disposed in the first mobility management function network element or the first mobility management entity. The apparatus includes a processor, coupled to a memory. The processor may be configured to execute indications in the memory, to implement the method performed by the first mobility management function network element or the first mobility management entity in any one of the third aspect and the possible implementations of the third aspect. Optionally, the apparatus further includes a memory. Optionally, the apparatus further includes a communications interface, and the processor is coupled to the communications interface.

When the apparatus is the first mobility management function network element or the first mobility management entity, the communications interface may be a transceiver or an input/output interface.

When the apparatus is the chip disposed in the first mobility management function network element or the first mobility management entity, the communications interface may be an input/output interface.

According to a twelfth aspect, a paging apparatus is provided. The apparatus may be the second mobility management function network element or the second mobility management entity in the foregoing method designs, or may be a chip disposed in the second mobility management function network element or the second mobility management entity. The apparatus includes a processor, coupled to a memory. The processor may be configured to execute indications in the memory, to implement the method performed by the second mobility management function network element or the second mobility management entity in any one of the fourth aspect and the possible implementations of the fourth aspect. Optionally, the apparatus further includes a memory. Optionally, the apparatus further includes a communications interface, and the processor is coupled to the communications interface.

When the apparatus is the second mobility management function network element or the second mobility management entity, the communications interface may be a transceiver or an input/output interface.

When the apparatus is the chip disposed in the second mobility management function network element or the second mobility management entity, the communications interface may be an input/output interface.

According to a thirteenth aspect, a program is provided. When being executed by a processor, the program is used to perform the methods provided in the first aspect to the fourth aspect.

According to a fourteenth aspect, a program product is provided. The program product includes program code. When the program code is run by a communications unit, a processing unit, a transceiver, or a processor of an apparatus (for example, a terminal device, an access network device, a mobility management function network element, or a mobility management entity), the apparatus is enabled to perform the method in any one of the first aspect to the fourth aspect and the possible implementations of the first aspect to the fourth aspect.

According to a fifteenth aspect, a computer-readable medium is provided. The computer-readable medium stores a program. The program enables an apparatus (for example, a terminal device, an access network device, a mobility management function network element, or a mobility management entity) to perform the method in any one of the first aspect to the fourth aspect and the possible implementations of the first aspect to the fourth aspect.

### BRIEF DESCRIPTION OF DRAWINGS

FIG. 1 is a schematic diagram of an application scenario of a technical solution according to an embodiment of this application;
FIG. 2 is a schematic flowchart of a paging method according to an embodiment of this application;
FIG. 3 is a schematic flowchart of another paging method according to an embodiment of this application;
FIG. 4 is a schematic flowchart of another paging method according to an embodiment of this application;
FIG. 5 is a schematic flowchart of another paging method according to an embodiment of this application;
FIG. 6 is a schematic flowchart of another paging method according to an embodiment of this application;
FIG. 7 is a schematic flowchart of another paging method according to an embodiment of this application.
FIG. 8 is a schematic flowchart of another paging method according to an embodiment of this application;
FIG. 9 is a schematic block diagram of a paging apparatus according to an embodiment of this application;
FIG. 10 is a schematic block diagram of another paging apparatus according to an embodiment of this application;
FIG. 11 is a schematic block diagram of another paging apparatus according to an embodiment of this application;
FIG. 12 is a schematic block diagram of another paging apparatus according to an embodiment of this application;
FIG. 13 is a schematic block diagram of another paging apparatus according to an embodiment of this application;
FIG. 14 is a schematic block diagram of a communications system according to an embodiment of this application; and
FIG. 15 is a schematic block diagram of another communications system according to an embodiment of this application.

### DESCRIPTION OF EMBODIMENTS

The following describes technical solutions of this application with reference to accompanying drawings.

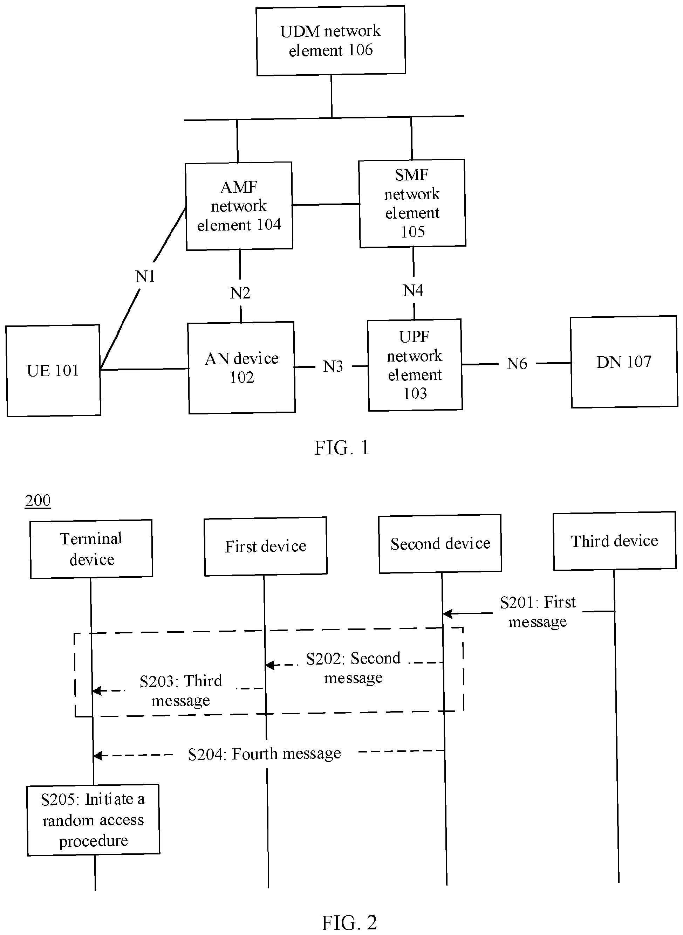

As shown in FIG. 1, an application scenario to which the technical solutions in embodiments of this application may be applied may include user equipment (user equipment, UE) 101, an access network (access network, AN) device 102, a user plane function (user plane function, UPF) network element 103, an access and mobility management function (access and mobility management function, AMF) network element 104, a session management function (session management function, SMF) network element 105, a unified data management function (unified data management, UDM) network element 106, and a data network (data network, DN) 107.

The UE may also be referred to as a terminal device. The terminal device may communicate with one or more core networks (core network, CN) by using the AN device. The terminal device may also be referred to as an access terminal, a terminal, a subscriber unit, a subscriber station, a mobile station, a mobile console, a remote station, a remote terminal, a mobile device, a user terminal, a wireless network device, a user agent, or a user apparatus. The terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another device connected to a wireless modem, a vehicle-mounted device, a wearable device, a terminal device in the internet of things or the internet of vehicles, any form of terminal device in a future network, or the like.

The AN device may be a radio access network (radio access network, RAN) device. An example of the RAN device is a base station (base station, BS).

The base station may also be referred to as a base station device, is a device that connects a terminal to a wireless network, and includes but is not limited to a transmission reception point (transmission reception point, TRP), a next generation NodeB (next generation node base station, gNB) in a 5G system, an evolved NodeB (evolved NodeB, eNB), a radio network controller (radio network controller, RNC), a NodeB (NodeB, NB), a base station controller (base station controller, BSC), a base transceiver station (base transceiver station, BTS), a home NodeB (for example, a home evolved NodeB, or a home NodeB, HNB), a baseband unit (base band unit, BBU), a Wi-Fi access point (access point, AP), a pico (pico) base station device, or the like.

It should be understood that a specific type of the base station is not limited in this specification. A name of a device having a base station function may vary with a system using a radio access technology. For ease of description, in all the embodiments of this application, the foregoing apparatuses that provide wireless communication functions for the terminal device are collectively referred to as a base station.

The UPF network element has functions of the terminal device, for example, packet forwarding, encapsulation, and statistics collection. An interface between the AN device and the UPF network element may be an N3 interface.

The AMF network element is responsible for access and mobility management of the terminal device. For example, the AMF network element is responsible for UE location update, UE registration with a network, or UE handover. An interface between the UE and the AMF may be an N1 interface, and an interface between the AN device and the AMF network element may be an N2 interface.

The SMF network element is responsible for selection and reselection of the UPF network element, assignment of an internet protocol (internet protocol, IP) address, and the like, and may be further responsible for session establishment, modification, release, and the like. An interface between the SMF network element and the UPF network element may be an N4 interface.

A PCF network element is configured to: provide a unified policy framework for network behavior management, provide a policy rule that needs to be executed for a control plane, obtain subscription information related to policy decision, and the like.

The UDM network element is configured to store subscription data of a user.

The DN is a carrier network that provides a data transmission service for the UE. For example, the DN may be a network that provides services such as an IP multi-media service (IP multi-media, IMS) and an internet service. An interface between the UPF network element and the DN may be an N6 interface.

It should be understood that embodiments of this application are not limited to the system architecture shown in FIG. 1. For example, a communications system to which a communications method in embodiments of this application may be applied may include more or fewer network elements or devices. The devices or the network elements in FIG. 1 may be hardware, or may be software obtained through functional division, or a combination thereof. The devices or the network elements in FIG. 1 may communicate with each other through another device or network element.

FIG. 2 is a schematic flowchart of a paging method 200 according to an embodiment of this application. The method 200 may be performed by a terminal device, a first device, a second device, and a third device. The terminal device includes a first subscriber identity module SIM card and a second SIM card. The first SIM card camps on a cell of the first device (for example, the first device is a gNB-1 or an eNB-1). The first SIM card is served by the second device (for example, the second device is an AMF-1 or an MME-1). The second SIM card is served by the third device (for example, the third device is an AMF-2 or an MME-2). The paging method 200 includes the following step:

S201: The third device sends a first message to the second device. The second device receives the first message sent by the third device. The first message includes information used to indicate an identifier of the first SIM card of the terminal device and information used to indicate an identifier of the second SIM card of the terminal device.

Optionally, the information that is in the first message and that is used to indicate the identifier of the first SIM card of the terminal device is identification information of the first SIM card (for example, a SIM1 ID), or a preset index value, and the second device may determine, based on the index value, that the index value corresponds to the identifier of the first SIM card.

Optionally, the information that is in the first message and that is used to indicate the identifier of the second SIM card of the terminal device is identification information of the second SIM card (for example, a SIM2 ID or a 5G serving-temporary mobile subscriber identity (5G serving-temporary mobile subscriber identity, 5G S-TMSI)), or a preset index value, and the second device may determine, based on the index value, that the index value corresponds to the identifier of the second SIM card.

Optionally, the first message further includes a paging parameter of the second SIM card. The paging parameter includes but is not limited to a paging priority (paging priority) and a paging origin (paging origin).

The paging priority may be used to indicate a priority for paging the terminal device, and the paging origin may be used to indicate whether paging is initiated for a protocol data unit (protocol data unit, PDU) session accessed by a non-3rd generation partnership project (3rd generation partnership project, 3GPP).

It should be understood that embodiments of this application are described by using an example in which the terminal device includes the first SIM card and the second SIM card. The first SIM card may be further understood as a first user identity, and the second SIM card may be further understood as a second user identity. The first user identity and the second user identity may be virtual SIM cards, or may be physical SIM cards. This is not limited in embodiments of this application.

It should be further understood that, in embodiments of this application, a "user identity" (for example, the first user identity or the second user identity) is a logical concept. For example, the "user identity" may correspond to a SIM card, subscriber information, a virtual SIM card, or a subscriber identity (for example, an international mobile subscriber identity (international mobile subscriber identity, IMSI) or a temporary mobile subscriber identity (temporary mobile subscriber identity, TMSI)).

The user identity may be any one of the following: a universal subscriber identity module (universal subscriber identity module, USIM) card, a SIM card, or an embedded subscriber identity module (embedded subscriber identity module, eSIM) card. This is not limited in embodiments of this application.

For ease of description, in embodiments of this application, a SIM card and evolution thereof are collectively referred to as a SIM card. For example, the SIM card may be an identity card of a digital mobile phone user in a global system for mobile communications (global system for mobile communications, GSM), is configured to store an identification number and a key of a user, and supports authentication on the user in the GSM. For another example, the SIM card may alternatively be a universal subscriber identity module (universal subscriber identity module, USIM) card, and may also be referred to as an upgraded SIM card.

It should be further understood that the second device may be the AMF-1 or the mobility management entity (mobility management entity, MME)-1 serving the first SIM card, and the third device may be the AMF-2 or the MME-2 serving the second SIM card. The SIM card 1 and the SIM card 2 (or the AMF-1 and the AMF-2) may belong to a same operator or different operators. This is not limited in embodiments of this application.

After the second device receives the first message sent by the third device, the second device may determine that the third device expects the second device to act as proxy for the third device to initiate paging to the second SIM card of the terminal device. In this case, the second device may first determine a state of the first SIM card, to select different proxy paging manners to initiate paging to the second SIM card. It should be understood that embodiments of this application are described by using an example in which the first SIM card acts as proxy for the second SIM card to perform paging.

In an embodiment, the method 200 includes the following steps.

S202: The second device sends a second message to the first device. The first device receives the second message sent by the second device. The second message is used to indicate to page the second SIM card.

In embodiments of this application, the first device may be the gNB-1 or the eNB-1.

When the first SIM card is in a connected (connected) state, an inactive (inactive) state, or an idle (idle) state, the second device may page the second SIM card by using the first device.

In embodiments of this application, that the first SIM card is in a connected state may be understood as that the terminal device may establish a communications channel with the first device by using an identity of the first SIM card. For example, the terminal device establishes a radio resource control (radio resource control, RRC) connection with a base station (for example, the gNB-1 or the eNB-1), and the terminal device may receive and send data or signaling on a network side by using the identity of the first SIM card. That the first SIM card is in a non-connected state may be understood as that there is no communications channel established between the terminal device and the base station (for example, the gNB-1 or the eNB-1) by using the identity of the first SIM card, and the non-connected state may include an idle state or an inactive state. That the first card is in a non-connected state may alternatively be understood as that the terminal device cannot send signaling or data to the network side by using the identity of the first SIM card, or cannot receive signaling or data from the network side by using the identity of the first SIM card. Similarly, the second SIM card may also be in a connected state, an inactive state, or an idle state.

It should be further understood that, in embodiments of this application, the connected state may also be understood as an RRC connected state, and the inactive state may also be understood as an RRC inactive state.

Optionally, the second message may be a paging message.

The second message may include the information used to indicate the identifier of the second SIM card, or the second message may include the information used to indicate the identifier of the first SIM card and first indication information, and the first indication information indicates that the second message is used to page the second SIM card.

For example, the second message may include the SIM2 ID, or the second message may include the SIM1 ID and a SIM2 paging indication.

It should be understood that, if the terminal device includes only the first SIM card and the second SIM card, the second message may include the information used to indicate the identifier of the first SIM card and a proxy paging indication. The proxy paging indication may indicate to initiate paging to a SIM card of the terminal device other than the first SIM card, or the proxy paging indication may indicate that the second message is not used to page the first SIM card. If the terminal device includes three or more SIM cards, in addition to the information used to indicate the identifier of the first SIM card and the proxy paging indication, the second message may further include the information used to indicate the identifier of the second SIM card.

Optionally, the second message further includes a paging parameter of the second SIM card.

For example, the second message further includes a paging priority and a paging origin.

Optionally, when the first SIM card is in an idle state, the second message further includes a paging parameter of the first SIM card.

For example, the paging parameter of the first SIM card includes but is not limited to a user equipment identity index value (UE identity index value) of the first SIM card, paging discontinuous reception (paging discontinuous reception, paging DRX) of the first SIM card, a tracking area identity list for paging (tracking area identity list for paging, TAI list for paging) of the first SIM card, and a radio capability for paging (radio capability for paging) of the first SIM card.

The UE identity index value is used by an access network device to calculate a paging frame. The paging DRX is used to indicate a paging cycle. The TAI list for paging is used to indicate a cell in which paging is sent. The radio capability for paging is used to indicate a radio capability for paging a specific terminal device, for example, includes information about a frequency band supported by the terminal device.

Optionally, when the first SIM card is in a connected state or an inactive state, the second message may carry only the UE identity index value of the first SIM card, and does not need to carry another paging parameter of the first SIM card. When the first SIM card is in a connected state or an inactive state, the first device may store some paging parameters of the first SIM card. Therefore, the second message sent by the second device to the first device may carry no paging parameter of the first SIM card, or may carry only some paging parameters of the first SIM card.

S203: The first device sends a third message to the terminal device. The terminal device receives the third message sent by the first device. The third message is used to indicate to page the second SIM card.

Optionally, the third message is a paging message.

Optionally, the third message includes the information used to indicate the identifier of the second SIM card (for example, the SIM2 ID or the 5G S-TMSI).

Optionally, the third message includes the information used to indicate the identifier of the first SIM card, and second indication information, and the second indication information indicates that the third message is used to page the second SIM card.

It should be understood that, if the terminal device includes only the first SIM card and the second SIM card, the third message may include the information used to indicate the identifier of the first SIM card and a proxy paging indication. The proxy paging indication may indicate to initiate paging to a SIM card of the terminal device other than the first SIM card, or the proxy paging indication may indicate that the third message is not used to page the first SIM card. If the terminal device includes three or more SIM cards, in addition to the information used to indicate the identifier of the first SIM card and the proxy paging indication, the third message may further include the information used to indicate the identifier of the second SIM card.

Optionally, if the first SIM card of the terminal device is in a connected state, the second message may alternatively be a proxy paging message. The proxy paging message may carry the information used to indicate the identifier of the first SIM card and a proxy paging indication. The proxy paging indication indicates to page a SIM card of the terminal device other than the first SIM card. The third message may alternatively be a proxy paging message. The proxy paging message may carry a proxy paging indication.

For example, the third message may be a radio resource control (radio resource control, RRC) message or a media access control control element (media access control control element, MAC CE).

Optionally, the proxy paging message may further include the information used to indicate the identifier of the second SIM card.

In another embodiment, the method 200 includes the following steps.

S204: When the first SIM card is in a connected state or an inactive state, the second device sends a fourth message to the terminal device. The terminal device receives the fourth message sent by the second device. The fourth message is used to indicate to page the second SIM card.

Optionally, if the terminal device includes only the first SIM card and the second SIM card, that the fourth message is used to indicate to page the second SIM card may be understood as that the fourth message is used to page a SIM card of the terminal device other than the first SIM card, or may be understood as that the fourth message is used to indicate that the fourth message is not a message used to page the first SIM card.

Optionally, when the terminal device includes three or more SIM cards, the fourth message may further include the information used to indicate the identifier of the second SIM card (for example, the SIM2 ID or the 5G S-TMSI).

S205: The terminal device initiates a random access procedure based on the received third message or fourth message by using the second SIM card.

It should be understood that, that the terminal device initiates a random access procedure by using the second SIM card may also be understood as that the terminal device responds to the paging by using the second SIM card.

It should be further understood that, for a process in which the terminal device initiates random access by using the second SIM card or a process in which the terminal device responds to the paging by using the second SIM card, refer to a process in the conventional technology. For brevity, details are not described herein.

In embodiments of this application, when the terminal device can receive signaling or data by using only the first SIM card, a network may add, to the signaling or the data sent to the first SIM card, indication information for paging the second SIM card. In this way, the terminal device can determine, based on the signaling or the data sent to the first SIM card, that the network pages the second SIM card. This avoids a paging loss, and shortens a delay generated when the terminal device receives downlink data or sends uplink data by using the second SIM card.

The foregoing describes the paging method 200 in embodiments of this application with reference to the method 200. The following separately describes, with reference to a method 300 to a method 800, proxy paging procedures performed when a first SIM card and a second SIM card are in different states.

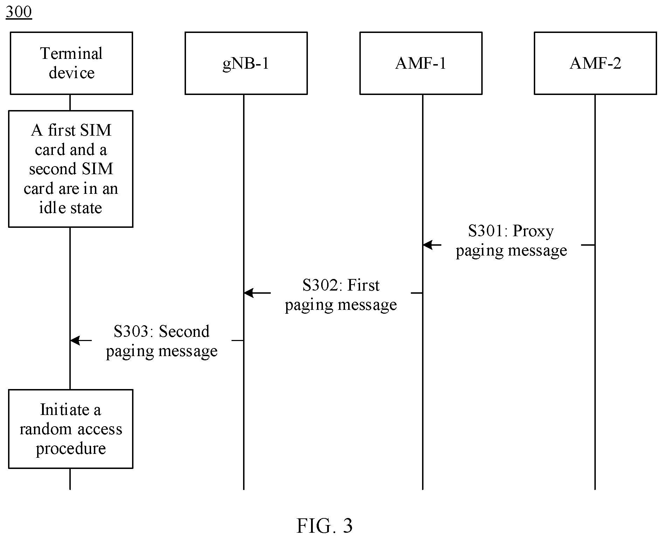

FIG. 3 is a schematic flowchart of a paging method 300 according to an embodiment of this application. As shown in FIG. 3, a first SIM card of a terminal device may be in an idle state, and a second SIM card of the terminal device may also be in an idle state. The method 300 includes the following steps.

S301: An AMF-2 sends a proxy paging message to an AMF-1. The AMF-1 receives the proxy paging message sent by the AMF-2. The AMF-1 serves the first SIM card of the terminal device, and the AMF-2 serves the second SIM card of the terminal device.

Optionally, the proxy paging message includes information used to indicate an identifier of the first SIM card and information used to indicate an identifier of the second SIM card.

Optionally, the proxy paging message further includes a paging parameter of the second SIM card.

For example, the paging parameter of the second SIM card may include a paging priority and a paging origin.

Optionally, after receiving the proxy paging message sent by the AMF-2, the AMF-1 may send a proxy paging response to the AMF-2. The proxy paging response may indicate that the AMF-1 receives the proxy paging message.

S302: The AMF-1 sends a first paging message to a gNB-1. The gNB-1 receives the first paging message sent by the AMF-1.

Optionally, the first paging message may include but is not limited to the information used to indicate the identifier of the second SIM card (for example, a SIM2 ID or a 5G S-TMSI), a UE identity index value of the first SIM card, paging DRX of the first SIM card, a TAI list for paging of the first SIM card, a radio capability for paging of the first SIM card, a paging priority of the second SIM card, and a paging origin of the second SIM card.

Optionally, the first paging message may include but is not limited to the information used to indicate the identifier of the first SIM card (for example, a SIM1 ID), a proxy paging indication, a UE identity index value of the first SIM card, paging DRX of the first SIM card, a TAI list for paging of the first SIM card, a radio capability for paging of the first SIM card, a paging priority of the second SIM card, and a paging origin of the second SIM card. The proxy paging indication may indicate to initiate paging to a SIM card of the terminal device other than the first SIM card, or the proxy paging indication may indicate that the first paging message is not used to page the first SIM card. Optionally, the first paging message further includes the information used to indicate the identifier of the second SIM card.

S303: The gNB-1 sends a second paging message to the terminal device. The terminal device receives the second paging message sent by the gNB-1. The second paging message is used to indicate to page the second SIM card.

Optionally, the gNB-1 may send the second paging message to the terminal device on a paging occasion of the first SIM card.

Optionally, the second paging message includes the information used to indicate the identifier of the second SIM card (for example, the SIM2 ID or the 5G S-TMSI).

Optionally, the second paging message includes the information used to indicate the identifier of the first SIM card and indication information, and the indication information indicates that the second paging message is a paging message used to page the second SIM card. Optionally, the second paging message further includes the information used to indicate the identifier of the second SIM card.

In embodiments of this application, when both the first SIM card and the second SIM card of the terminal device are in an idle state, the AMF-1 may act as proxy for the AMF-2 to initiate paging to the second SIM card of the terminal device. After receiving the second paging message from the gNB-1, the terminal device may determine, based on the information in the second paging message, that the paging message is a paging message initiated for the second SIM card, so that the terminal device can initiate a random access procedure by using the second SIM card. This helps avoid a paging loss, and shorten a delay generated when the terminal device receives downlink data or sends uplink data by using the second SIM card.

It should be understood that the method 300 to the method 800 are described by using a 5G scenario as an example. The paging methods in embodiments of this application may also be applied to a 4G scenario. In this case, in the method 300 to the method 800, the AMF may be replaced with a mobility management entity (mobility management entity, MME), and the gNB may be replaced with an eNB.

It should be further understood that network standards of the first SIM card and the second SIM card are not limited in embodiments of this application.

For example, the network standard of the first SIM card may be 4G, and the network standard of the second SIM card may be 5G.

For another example, the network standard of the first SIM card may be 5G, and the network standard of the second SIM card may be 4G.

For another example, the network standard of the first SIM card may be 4G, and the network standard of the second SIM card may be 4G.

For another example, the network standard of the first SIM card may be 5G, and the network standard of the second SIM card may be 5G.

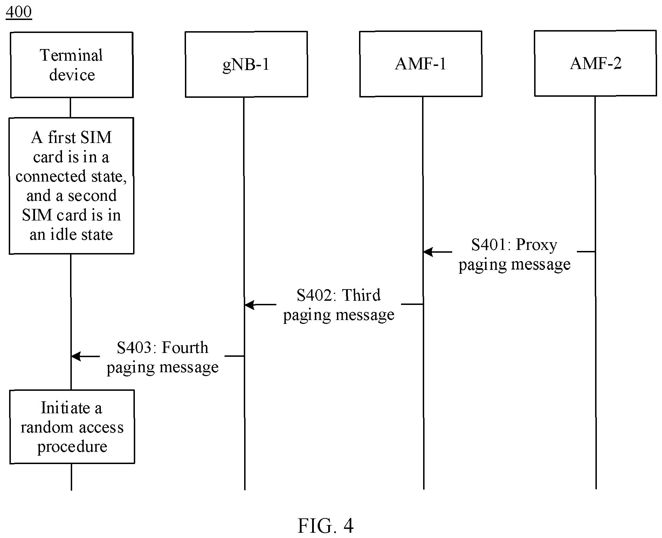

FIG. 4 is a schematic flowchart of a paging method 400 according to an embodiment of this application. As shown in FIG. 4, a first SIM card of a terminal device may be in a connected state, and a second SIM card of the terminal device may be in an idle state. The method 400 includes the following steps.

S401: An AMF-2 sends a proxy paging message to an AMF-1. The AMF-1 receives the proxy paging message sent by the AMF-2. The AMF-1 serves the first SIM card of the terminal device, and the AMF-2 serves the second SIM card of the terminal device.

Optionally, the proxy paging message includes information used to indicate an identifier of the first SIM card and information used to indicate an identifier of the second SIM card.

Optionally, the proxy paging message further includes a paging parameter of the second SIM card.

For example, the paging parameter of the second SIM card may include a paging priority and a paging origin.

Optionally, after receiving the proxy paging message sent by the AMF-2, the AMF-1 may send a proxy paging response to the AMF-2. The proxy paging response may indicate that the AMF-1 receives the proxy paging message, or may indicate that the AMF-1 determines that proxy paging may be performed.

In embodiments of this application, one SIM card of a dual-SIM terminal may act as proxy for the other SIM card to perform paging. For example, the first SIM card acts as proxy for the second SIM card to perform paging, or the second SIM card acts as proxy for the first SIM card to perform paging. It is assumed that the first SIM card acts as proxy for the second SIM card to perform paging. In this case, if a network side determines to page the second SIM card, the network side may page the second SIM card by using the first SIM card. That the network side pages the second SIM card by using the first SIM card may also be understood as that a network device indicates, by using the first SIM card, that the second SIM card is paged. Specifically, the AMF-1 may send a message/information to a first user identity, to page a second user identity. Alternatively, the AMF-1 may send a message/information to the gNB-1, to indicate to page a second user identity, and the gNB-1 sends a message/information to a first user identity, to page the second user identity.

S402: The AMF-1 sends a third paging message to the gNB-1. The gNB-1 receives the third paging message sent by the AMF-1.

Optionally, the third paging message may include but is not limited to the information used to indicate the identifier of the second SIM card (for example, a SIM2 ID or a 5G S-TMSI), a UE identity index value of the first SIM card, a paging priority of the second SIM card, and a paging origin of the second SIM card.

In the method 400, because the first SIM card is in a connected state, the gNB-1 may store a paging parameter of the first SIM card, for example, paging DRX of the first SIM card and a radio capability for paging of the first SIM card. In this case, the third paging message sent by the AMF-1 to the gNB-1 may carry only some paging parameters of the first SIM card, or may carry no paging parameter of the first SIM card.

Optionally, the third paging message may include but is not limited to the information used to indicate the identifier of the first SIM card (for example, a SIM1 ID), a proxy paging indication, paging DRX of the first SIM card, a paging priority of the second SIM card, and a paging origin of the second SIM card. The proxy paging indication may indicate to initiate paging to a SIM card of the terminal device other than the first SIM card, or the proxy paging indication may indicate that the third paging message is not used to page the first SIM card. Optionally, the third paging message further includes the information used to indicate the identifier of the second SIM card.

S403: The gNB-1 sends a fourth paging message to the terminal device. The terminal device receives the fourth paging message sent by the gNB-1. The fourth paging message is used to indicate to page the second SIM card.

It should be understood that, for a process of S303, refer to the process of S203. Content carried in the fourth paging message may be the same as the content carried in the second paging message. For brevity, details are not described herein again.

In embodiments of this application, when the first SIM card of the terminal device is in a connected state and the second SIM card of the terminal device is in an idle state, the AMF-1 may alternatively act as proxy for the AMF-2 to initiate paging to the second SIM card of the terminal device. After receiving the fourth paging message from the gNB-1, the terminal device may determine, based on the information in the fourth paging message, that the paging message is a paging message initiated for the second SIM card, so that the terminal device can initiate a random access procedure by using the second SIM card. This helps avoid a paging loss, and shorten a delay generated when the terminal device receives downlink data or sends uplink data by using the second SIM card.

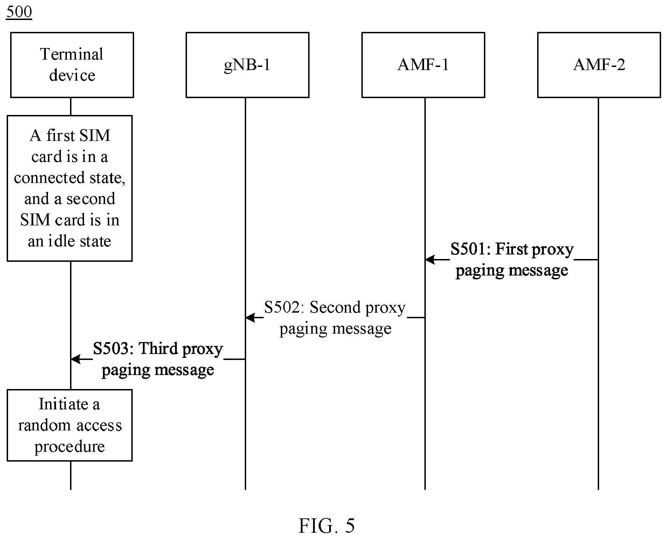

FIG. 5 is a schematic flowchart of a paging method 500 according to an embodiment of this application. As shown in FIG. 5, a first SIM card of a terminal device may be in a connected state, and a second SIM card of the terminal device may be in an idle state. The method 500 includes the following steps.

S501: An AMF-2 sends a first proxy paging message to an AMF-1. The AMF-1 receives the first proxy paging message sent by the AMF-2. The AMF-1 serves the first SIM card of the terminal device, and the AMF-2 serves the second SIM card of the terminal device.

Optionally, the first proxy paging message includes information used to indicate an identifier of the first SIM card and information used to indicate an identifier of the second SIM card.

Optionally, the first proxy paging message further includes a paging parameter of the second SIM card.

For example, the paging parameter of the second SIM card may include a paging priority and a paging origin.

Optionally, after receiving the first proxy paging message sent by the AMF-2, the AMF-1 may send a proxy paging response to the AMF-2. The proxy paging response may indicate that the AMF-1 receives the proxy paging message.

S502: The AMF-1 sends a second proxy paging message to a gNB-1. The gNB-1 receives the second proxy paging message sent by the AMF-1. The second proxy paging message is used to indicate to page the second SIM card.

Optionally, the second proxy paging message may include the information used to indicate the identifier of the first SIM card.

For example, the second proxy paging message includes two bytes. One byte is used to indicate the identifier of the first SIM card, and the other byte is used to indicate to page the second SIM card.

Optionally, the second proxy paging message further includes the information used to indicate the identifier of the second SIM card.

For example, the second proxy paging message includes two bytes. One byte is used to indicate the identifier of the first SIM card, and the other byte is used to indicate the identifier of the second SIM card. The byte used to indicate the identifier of the second SIM card may further implicitly indicate to page the second SIM card.

For example, the second proxy paging message includes three bytes. One byte is used to indicate the identifier of the first SIM card, another byte is used to indicate the identifier of the second SIM card, and still another byte is used to indicate to page the second SIM card.

S503: The gNB-1 sends a third proxy paging message to the terminal device. The terminal device receives the third proxy paging message sent by the gNB-1. The third proxy paging message is used to indicate to page the second SIM card.

Optionally, the third proxy paging message may be an RRC message or a MAC CE.

For example, the third proxy paging message includes one byte. The byte is used to indicate to page the second SIM card.

For example, the third proxy paging message includes two bytes. One byte is used to indicate to page the second SIM card, and the other byte is used to indicate the identifier of the second SIM card.

In embodiments of this application, when the first SIM card of the terminal device is in a connected state and the second SIM card of the terminal device is in an idle state, the AMF-1 may alternatively act as proxy for the AMF-2 to initiate paging to the second SIM card of the terminal device. After receiving the proxy paging message from the gNB-1, the terminal device may determine, based on the information in the proxy paging message, that the proxy paging message indicates to initiate paging to the second SIM card, so that the terminal device can initiate a random access procedure by using the second SIM card. This helps avoid a paging loss, and shorten a delay generated when the terminal device receives downlink data or sends uplink data by using the second SIM card.

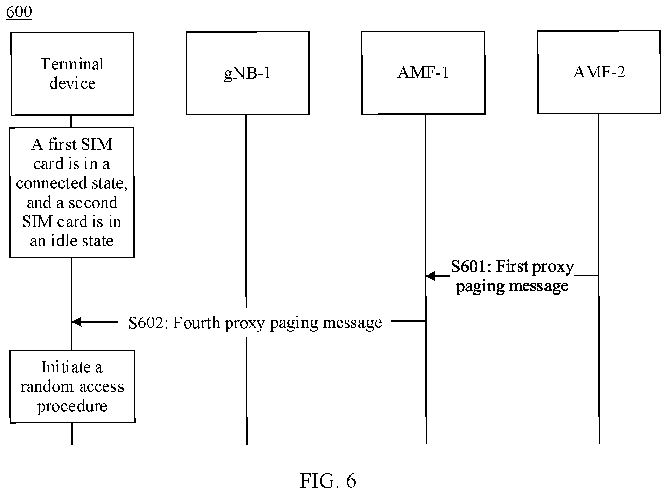

FIG. 6 is a schematic flowchart of a paging method 600 according to an embodiment of this application. As shown in FIG. 6, a first SIM card of a terminal device may be in a connected state, and a second SIM card of the terminal device may be in an idle state. The method 600 includes the following steps.

S601: An AMF-2 sends a first proxy paging message to an AMF-1. The AMF-1 receives the first proxy paging message sent by the AMF-2. The AMF-1 serves the first SIM card of the terminal device. The AMF-2 serves the second SIM card of the terminal device.

Optionally, the first proxy paging message includes information used to indicate an identifier of the first SIM card and information used to indicate an identifier of the second SIM card.

Optionally, the first proxy paging message further includes a paging parameter of the second SIM card.

For example, the paging parameter of the second SIM card may include a paging priority and a paging origin.

Optionally, after receiving the first proxy paging message sent by the AMF-2, the AMF-1 may send a proxy paging response to the AMF-2. The proxy paging response may indicate that the AMF-1 receives the proxy paging message.

S602: The AMF-1 sends a fourth proxy paging message to the terminal device. The terminal device receives the fourth proxy paging message sent by the AMF-1. The fourth proxy paging message is used to indicate to initiate paging to the second SIM card.

Optionally, the fourth proxy paging message may be a notification message.

For example, the fourth proxy paging message includes one byte. The byte is used to indicate to page the second SIM card.

For example, the fourth proxy paging message includes one byte. The byte is used to indicate the identifier of the second SIM card, and may further implicitly indicate to page the second SIM card.

For example, the fourth proxy paging message includes two bytes. One byte is used to page the second SIM card, and the other byte is used to indicate the identifier of the second SIM card.

In embodiments of this application, when the first SIM card of the terminal device is in a connected state and the second SIM card of the terminal device is in an idle state, the AMF-1 may alternatively act as proxy for the AMF-2 to initiate paging to the second SIM card of the terminal device. After receiving the proxy paging message from the AMF-1, the terminal device may determine, based on the information in the proxy paging message, that the proxy paging message indicates to initiate paging to the second SIM card, so that the terminal device can initiate a random access procedure by using the second SIM card. This helps avoid a paging loss, and shorten a delay generated when the terminal device receives downlink data or sends uplink data by using the second SIM card.

In some possible implementations, if the first SIM card is in a connected state and the second SIM card is in an inactive state, in the paging method 400 to the paging method 600, a gNB-2 may send a proxy paging message to the AMF-2 before steps S401, S501, and S601. It should be understood that the proxy paging message sent by the NB-2 to the AMF-2 may carry content, or may include indication information. The indication information indicates to page the card 2.

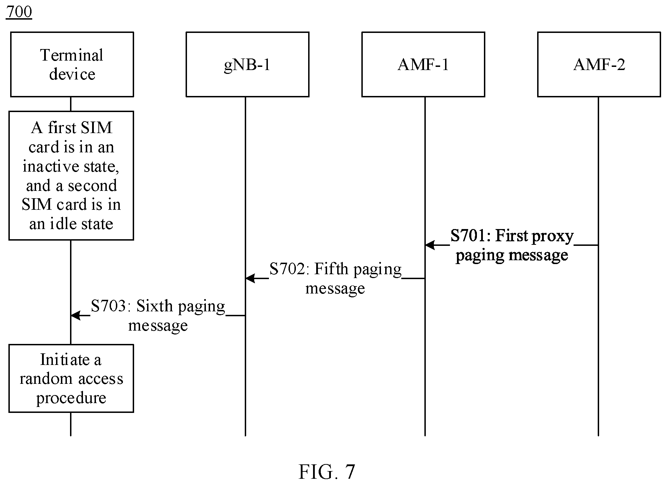

FIG. 7 is a schematic flowchart of a paging method 700 according to an embodiment of this application. As shown in FIG. 7, a first SIM card of a terminal device may be in an inactive state, and a second SIM card of the terminal device may be in an idle state. The method 700 includes the following steps.

S701: An AMF-2 sends a first proxy paging message to an AMF-1. The AMF-1 receives the first proxy paging message sent by the AMF-2. The AMF-1 serves the first SIM card of the terminal device, and the AMF-2 serves the second SIM card of the terminal device.

Optionally, the first proxy paging message includes information used to indicate an identifier of the first SIM card and information used to indicate an identifier of the second SIM card.

Optionally, the first proxy paging message further includes a paging parameter of the second SIM card.

For example, the paging parameter of the second SIM card may include a paging priority and a paging origin.

Optionally, after receiving the first proxy paging message sent by the AMF-2, the AMF-1 may send a proxy paging response to the AMF-2. The proxy paging response may indicate that the AMF-1 receives the proxy paging message.

S702: The AMF-1 sends a fifth paging message to a gNB-1. The gNB-1 receives the fifth paging message sent by the AMF-1.

It should be understood that, for S702, refer to the foregoing description of S402. Content of the fifth paging message may be the same as the content of the third paging message. For brevity, details are not described herein again.

S703: The gNB-1 sends a sixth paging message to the terminal device. The terminal device receives the sixth paging message sent by the gNB-1. The sixth paging message is used to indicate to page the second SIM card.

It should be understood that, for a process of S703, refer to the process of S203. Content carried in the sixth paging message may be the same as the content carried in the second paging message. For brevity, details are not described herein again.

In embodiments of this application, when the first SIM card of the terminal device is in an inactive state and the second SIM card of the terminal device is in an idle state, the AMF-1 may alternatively act as proxy for the AMF-2 to initiate paging to the second SIM card of the terminal device. After receiving the sixth paging message from the gNB-1, the terminal device may determine, based on the information in the sixth paging message, that the paging message is a paging message initiated for the second SIM card, so that the terminal device can initiate a random access procedure by using the second SIM card. This helps avoid a paging loss, and shorten a delay generated when the terminal device receives downlink data or sends uplink data by using the second SIM card.

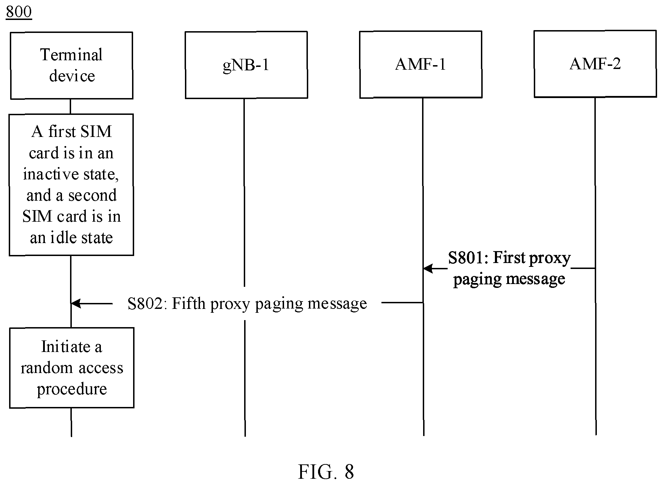

FIG. 8 is a schematic flowchart of a paging method 800 according to an embodiment of this application. As shown in FIG. 8, a first SIM card of a terminal device may be in an inactive state, and a second SIM card of the terminal device may be in an idle state. The method 800 includes the following steps.

S801: An AMF-2 sends a first proxy paging message to an AMF-1. The AMF-1 receives the first proxy paging message sent by the AMF-2. The AMF-1 serves the first SIM card of the terminal device, and the AMF-2 serves the second SIM card of the terminal device.

Optionally, the first proxy paging message includes information used to indicate an identifier of the first SIM card and information used to indicate an identifier of the second SIM card.

Optionally, the first proxy paging message further includes a paging parameter of the second SIM card.

For example, the paging parameter of the second SIM card may include a paging priority and a paging origin.

Optionally, after receiving the first proxy paging message sent by the AMF-2, the AMF-1 may send a proxy paging response to the AMF-2. The proxy paging response may indicate that the AMF-1 receives the proxy paging message.

S802: The AMF-1 sends a fifth proxy paging message to the terminal device. The terminal device receives the fifth proxy paging message sent by the AMF-1. The fifth proxy paging message is used to indicate to initiate paging to the second SIM card.

It should be understood that, for a process of S802, refer to the process of S602. Content of the fifth proxy paging message may be the same as the content of the fourth proxy paging message. For brevity, details are not described herein again.

In embodiments of this application, when the first SIM card of the terminal device is in an inactive state and the second SIM card of the terminal device is in an idle state, the AMF-1 may alternatively act as proxy for the AMF-2 to initiate paging to the second SIM card of the terminal device. After receiving the proxy paging message from the AMF-1, the terminal device may determine, based on the information in the proxy paging message, that the proxy paging message indicates to initiate paging to the second SIM card, so that the terminal device can initiate a random access procedure by using the second SIM card. This helps avoid a paging loss, and shorten a delay generated when the terminal device receives downlink data or sends uplink data by using the second SIM card.

In some possible implementations, if both the first SIM card and the second SIM card are in an inactive state, in the paging method 700 and the paging method 800, a gNB-2 may send a proxy paging message to the AMF-2 before steps S701 and S801. It should be understood that the proxy paging message sent by the NB-2 to the AMF-2 may carry content, or may include indication information. The indication information indicates to page the card 2.

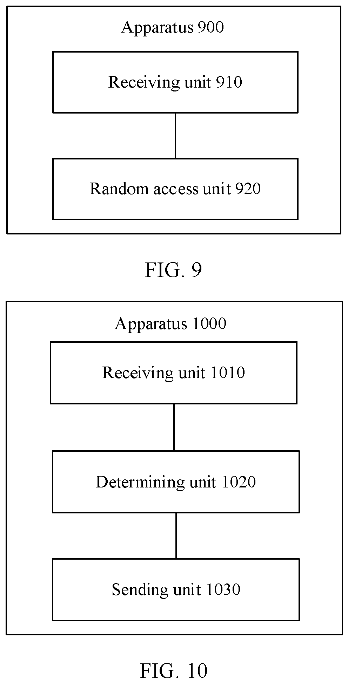

The foregoing describes in detail the paging methods in embodiments of this application with reference to FIG. 2 to FIG. 8. The following describes in detail paging apparatuses and communications systems in embodiments of this application with reference to FIG. 9 to FIG. 15. The technical features described in the method embodiments are also applicable to the following apparatus embodiments.

FIG. 9 is a schematic block diagram of a paging apparatus 900 according to an embodiment of this application. As shown in FIG. 9, the paging apparatus 900 includes a first subscriber identity module SIM card and a second SIM card. The first SIM card is served by a first device, and the first SIM card camps on a cell of a second device. The apparatus 900 includes:
a receiving unit 910, configured to receive a first message sent by the first device or the second device, where the first message is used to indicate to page the second SIM card; and
a random access unit 920, configured to initiate a random access procedure based on the first message by using the second SIM card.

Optionally, the first message includes information used to indicate an identifier of the second SIM card, or the first message includes information used to indicate an identifier of the first SIM card and first indication information, and the first indication information indicates that the first message is used to page the second SIM card.

Optionally, the receiving unit 910 is specifically configured to:
when the first SIM card is in a connected state, receive a radio resource control RRC message or a media access control control element MAC CE sent by the second device.

Optionally, the receiving unit 910 is specifically configured to:
when the first SIM card is in a connected state or an inactive state, receive the first message sent by the first device.

Optionally, the first message further includes information used to indicate an identifier of the second SIM card.

Specifically, the paging apparatus 900 may correspond to the terminal device in the paging methods 300 to 800 in embodiments of this application. The paging apparatus 900 may include a module (or unit) configured to perform the method performed by the terminal device in the method 300 to the method 800. In addition, each module (or unit) in the apparatus 900 and the foregoing other operations and/or functions are intended to implement corresponding procedures of the method 300 to the method 800. A specific process in which each module (or unit) performs the corresponding step is described in detail in the method 300 to the method 800. For brevity, details are not described herein again.

FIG. 10 is a schematic block diagram of a paging apparatus 1000 according to an embodiment of this application. As shown in FIG. 10, the paging apparatus 1000 includes:
a receiving unit 1010, configured to receive a first message sent by a second device, where the first message is used to indicate to page a first SIM card of a terminal device, the terminal device further includes a second SIM card, the second SIM card camps on a cell of the paging apparatus, and the second SIM card is served by the second device;
a determining unit 1020, configured to determine that the first message is used to indicate to page the first SIM card of the terminal device; and
a sending unit 1030, configured to send the first message to the terminal device.

Optionally, the first message includes information used to indicate an identifier of the first SIM card, or the first message includes information used to indicate an identifier of the second SIM card and first indication information, and the first indication information indicates that the first message is used to page the first SIM card.

Optionally, the first message further includes a paging parameter of the first SIM card.

Optionally, when the second SIM card is in an idle state, the first message further includes a paging parameter of the second SIM card.

Optionally, when the second SIM card is in a connected state, the first message includes information used to indicate an identifier of the second SIM card.

Optionally, the first message further includes information used to indicate an identifier of the first SIM card.

Specifically, the paging apparatus 1000 may correspond to the gNB-1 (or the eNB-1) in the paging methods 300 to 800 in embodiments of this application, and the paging apparatus 1000 may include a module (or unit) configured to perform the method performed by the gNB-1 (or the eNB-1) in the method 300 to the method 800. In addition, each module (or unit) in the apparatus 1000 and the foregoing other operations and/or functions are intended to implement corresponding procedures of the method 300 to the method 800. A specific process in which each module (or unit) performs the corresponding step is described in detail in the method 300 to the method 800. For brevity, details are not described herein again.

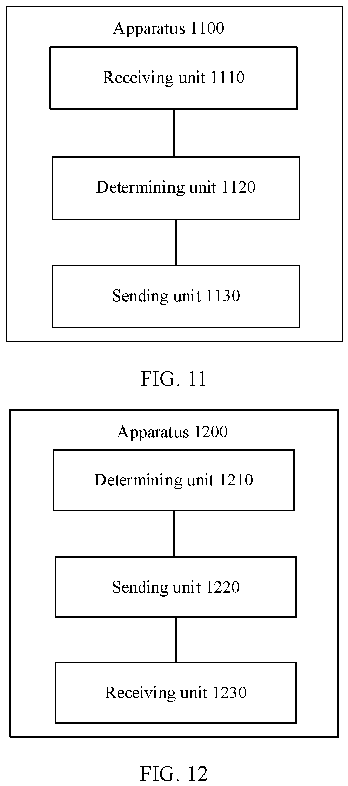

FIG. 11 is a schematic block diagram of a paging apparatus 1100 according to an embodiment of this application. As shown in FIG. 11, the paging apparatus 1100 includes:
a receiving unit 1110, configured to receive a first message sent by a second device, where the first message includes information used to indicate an identifier of a first SIM card of a terminal device and information used to indicate an identifier of a second SIM card of the terminal device, the first SIM card is served by a first device, and the second SIM card is served by the second device;
a determining unit 1120, configured to determine a second message, where the second message is used to indicate to page the second SIM card; and
a sending unit 1130, configured to send the second message to a third device or the terminal device, where the first SIM card camps on a cell of the third device.

Optionally, the second message includes the information used to indicate the identifier of the second SIM card, or the second message includes the information used to indicate the identifier of the first SIM card and first indicate ion information, and the first indication information indicates that the second message is used to page the second SIM card.

Optionally, the second message further includes a paging parameter of the second SIM card.

Optionally, when the first SIM card is in an idle state, the second message further includes a paging parameter of the first SIM card.

Optionally, the sending unit 1130 is specifically configured to:
when the first SIM card is in a connected state, send the second message to the third device, where the second message includes the information used to indicate the identifier of the first SIM card.

Optionally, the sending unit 1130 is specifically configured to:
when the first SIM card is in a connected state or an inactive state, send the second message to the terminal device.

Optionally, the second message further includes the information used to indicate the identifier of the second SIM card.

Specifically, the paging apparatus 1100 may correspond to the AMF-1 (or the MME-1) in the paging methods 300 to 800 in embodiments of this application. The paging apparatus 1100 may include a module (or unit) configured to perform the method performed by the AMF-1 (or the MME-1) in the method 300 to the method 800. In addition, each module (or unit) in the apparatus 1100 and the foregoing other operations and/or functions are intended to implement corresponding procedures of the method 300 to the method 800. A specific process in which each module (or unit) performs the corresponding step is described in detail in the method 300 to the method 800. For brevity, details are not described herein again.

FIG. 12 is a schematic block diagram of a paging apparatus 1200 according to an embodiment of this application. As shown in FIG. 12, the paging apparatus 1200 includes:
a determining unit 1210, configured to determine a first message, where the first message includes information used to indicate an identifier of a first SIM card of a terminal device and information used to indicate an identifier of a second SIM card of the terminal device; and
a sending unit 1220, configured to send the first message to a first device, where the first SIM card is served by the first device, and the second SIM card is served by the paging apparatus.

Optionally, the apparatus 1200 further includes:
a receiving unit 1230, configured to: when the second SIM card is in an inactive state, receive a proxy paging message sent by a fourth device, where the second SIM card camps on a cell of the fourth device.

Optionally, the proxy paging message may carry no content, or may carry indication information. The indication information indicates to page the second SIM card.

Specifically, the paging apparatus 1200 may correspond to the AMF-2 (or the MME-2) in the paging methods 300 to 800 in embodiments of this application. The paging apparatus 1200 may include a module (or unit) configured to perform the method performed by the AMF-2 (or the MME-2) in the method 300 to the method 800. In addition, each module (or unit) in the apparatus 1200 and the foregoing other operations and/or functions are intended to implement corresponding procedures of the method 300 to the method 800. A specific process in which each module (or unit) performs the corresponding step is described in detail in the method 300 to the method 800. For brevity, details are not described herein again.

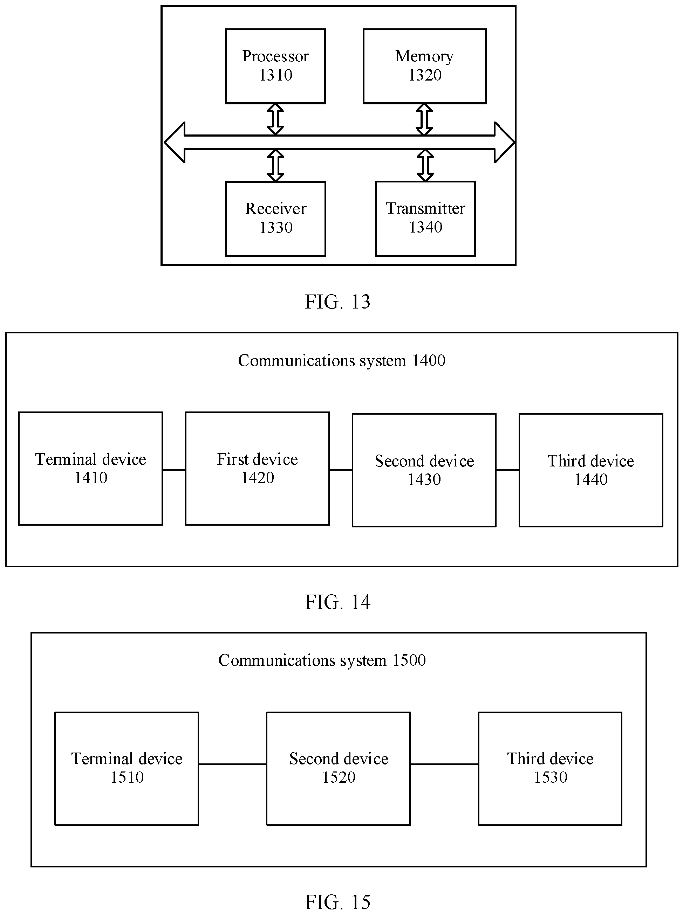

FIG. 13 is a schematic block diagram of a communications apparatus 1300 according to an embodiment of this application. It should be understood that the paging apparatus 1300 shown in FIG. 13 is merely an example. The apparatus in embodiments of this application may further include another module or unit, or may include a module with a function similar to that of each module in FIG. 13.

The communications apparatus 1300 may include one or more processors 1310, one or more memories 1320, a receiver 1330, and a transmitter 1340. The receiver 1330 and the transmitter 1340 may be integrated together, and are referred to as a transceiver. The memory 1320 is configured to store program code to be executed by the processor 1310. The processor 1310 may be integrated with the memory 1320, or the processor 1310 is coupled to the one or more memories 1320, to invoke instructions in the memory 1320.

In an embodiment, the processor 1310 may be configured to implement an operation or a step that can be implemented by the random access unit 920 in FIG. 9, and the receiver 1330 may be configured to implement an operation or a step that can be implemented by the receiving unit 910 in FIG. 9.

In another embodiment, the processor 1310 may be configured to implement an operation or a step that can be implemented by the determining unit 1020 in FIG. 10, and the receiver 1330 and the transmitter 1340 may be configured to implement operations or steps that can be implemented by the receiving unit 1010 and the sending unit 1030 in FIG. 10.

In another embodiment, the processor 1310 may be configured to implement an operation or a step that can be implemented by the determining unit 1120 in FIG. 11, and the receiver 1330 and the transmitter 1340 may be configured to implement operations or steps that can be implemented by the receiving unit 1110 and the sending unit 1130 in FIG. 11.

In still another embodiment, the processor 1310 may be configured to implement an operation or a step that can be implemented by the determining unit 1210 in FIG. 12, and the receiver 1330 and the transmitter 1340 may be configured to implement operations or steps that can be implemented by the sending unit 1220 and the receiving unit 1230 in FIG. 12.

FIG. 14 is a schematic block diagram of a communications system 1400 according to an embodiment of this application. As shown in FIG. 14, the communications system 1400 includes a terminal device 1410, a first device 1420, a second device 1430, and a third device 1440. The terminal device 1410 may include the apparatus 900. The first device 1420 may include the apparatus 1000. The second device 1430 may include the apparatus 1100. The third device 1440 may include the apparatus 1200.

FIG. 15 is a schematic block diagram of another communications system 1500 according to an embodiment of this application. As shown in FIG. 15, the communications system 1500 includes a terminal device 1510, a second device 1520, and a third device 1530. The terminal device 1510 may include the apparatus 900. The second device 1520 may include the apparatus 1100. The third device 1530 may include the apparatus 1200.

In embodiments of this application, it should be noted that the method embodiments in embodiments of this application may be applied to a processor, or may be implemented by a processor. The processor may be an integrated circuit chip and has a signal processing capability. In an implementation process, each step in the foregoing method embodiments can be implemented by using a hardware integrated logic circuit in the processor, or by using software-form indications. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic component, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like. Steps of the methods disclosed with reference to embodiments of this application may be directly executed and completed by using a hardware decoding processor, or may be executed and completed by using a combination of hardware and software modules in a decoding processor. The software module may be located in a mature storage medium in the field, such as a random access memory, a flash memory, a read-only memory, a programmable read-only memory, an electrically erasable programmable memory, or a register. The storage medium is located in a memory. The processor reads information in the memory and completes the steps in the foregoing methods in combination with hardware of the processor.

It may be understood that a memory element in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By using illustrative but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that memories in the systems and the methods described in this specification include but are not limited to the memories and any memory of another suitable type.

It should be understood that "one embodiment" or "an embodiment" mentioned in this specification indicates that particular characteristics, structures, or features that are related to the embodiment are included in at least one embodiment of this application. Therefore, "in one embodiment" or "in an embodiment" appearing in this specification does not necessarily refer to a same embodiment. In addition, the particular characteristics, structures, or features may be combined in one or more embodiments in any appropriate manner. It should be understood that, in various embodiments of this application, sequence numbers of the foregoing processes do not mean execution sequences. The execution sequences of the processes should be determined according to functions and internal logic of the processes, and do not constitute any limitation on implementation processes of embodiments of this application.

In addition, the terms "system" and "network" may be used interchangeably in this specification.

The term "and/or" in this specification describes only an association relationship between associated objects and indicates that three relationships may exist. For example, A and/or B may represent the following cases: Only A exists, both A and B exist, and only B exists. In addition, the character "/" in this specification usually indicates an "or" relationship between the associated objects.

The terms "first", "second", and the like appearing in this application are merely intended to distinguish between different objects, and "first" and "second" do not limit an actual sequence or a function of the objects modified by "first" and "second". Expressions such as "example", "for example", "such as", "optional design", and "a design" in this application are merely used to represent examples, instances, or descriptions. Any embodiment or design scheme described as "for example", "an example", "for example", "an optional design", or "a design" in this application should not be explained as being more preferred or having more advantages than another embodiment or design scheme. Specifically, using these words is intended to present a related concept in a specific manner.

This application assigns names to various objects that may appear in this application, for example, various messages/information/devices/network elements/systems/apparatuses/actions/operations/procedures/concepts. It may be understood that the specific names do not constitute a limitation on the related objects, and the assigned names may change with a factor such as a scenario, a context, or a use habit. Technical meanings of technical terms in this application should be understood and determined mainly based on functions and technical effects that are of the technical terms and that are reflected/performed in the technical solutions.

The network architecture and service scenarios described in embodiments of this application are intended to make readers understand the technical solutions in embodiments of this application more clearly, and do not constitute a limitation on the technical solutions provided in embodiments of this application. A person of ordinary skill in the art may know that, with evolution of the network architecture and emergence of new service scenarios, the technical solutions provided in embodiments of this application are also applicable to similar technical problems.

All or some of the foregoing embodiments may be implemented by software, hardware, firmware, or any combination thereof. When the software is used for implementation, all or some of the embodiments may be implemented in a form of a computer program product. The computer program product may include one or more computer indications. When the computer program indications are loaded and executed on a computer, all or some of the procedures or functions according to embodiments of this application are generated. The computer may be a general-purpose computer, a special-purpose computer, a computer network, or other programmable apparatuses. The computer indications may be stored in a computer-readable storage medium or may be transmitted from a computer-readable storage medium to another computer-readable storage medium. For example, the computer indications may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic disk), an optical medium (for example, a DVD), a semiconductor medium (for example, a solid-state drive (solid-state drive, SSD)), or the like.

A person of ordinary skill in the art may be aware that, in combination with examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions of each particular application, but it should not be considered that the implementation goes beyond the scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A paging method, wherein the paging method is applied to a terminal device, the terminal device comprises a first subscriber identity module SIM card and a second SIM card, the first SIM card is served by a first device, the first SIM card camps on a cell of a second device, and the method comprises:
receiving, by the terminal device, a first message sent by the first device or the second device, wherein the first message is used to indicate to page the second SIM card; and
initiating, by the terminal device, a random access procedure based on the first message by using the second SIM card.

2. The method according to claim 1, wherein the first message comprises information used to indicate an identifier of the second SIM card, or the first message comprises information used to indicate an identifier of the first SIM card and first indication information, and the first indication information indicates that the first message is used to page the second SIM card.

3. The method according to claim 1, wherein the receiving, by the terminal device, a first message sent by the first device or the second device comprises:
when the first SIM card is in a connected state, receiving, by the terminal device, a radio resource control RRC message or a media access control control element MAC CE sent by the second device.

4. The method according to claim 1, wherein the receiving, by the terminal device, a first message sent by the first device or the second device comprises:
when the first SIM card is in a connected state or an inactive state, receiving, by the terminal device, the first message sent by the first device.

5. The method according to claim 3 or 4, wherein the first message further comprises information used to indicate an identifier of the second SIM card.

6. A paging method, comprising:
receiving, by a first device, a first message sent by a second device, wherein the first message is used to indicate to page a first SIM card of a terminal device, the terminal device further comprises a second SIM card, the second SIM card camps on a cell of the first device, and the second SIM card is served by the second device; and
sending, by the first device, the first message to the terminal device.

7. The method according to claim 6, wherein the first message comprises information used to indicate an identifier of the first SIM card, or the first message comprises information used to indicate an identifier of the second SIM card and first indication information, and the first indication information indicates that the first message is used to page the first SIM card.

8. The method according to claim 7, wherein the first message further comprises a paging parameter of the first SIM card.

9. The method according to claim 7 or 8, wherein when the second SIM card is in an idle state, the first message further comprises a paging parameter of the second SIM card.

10. The method according to claim 6, wherein when the second SIM card is in a connected state, the first message comprises information used to indicate an identifier of the second SIM card.

11. The method according to claim 10, wherein the first message further comprises information used to indicate an identifier of the first SIM card.

12. A paging method, comprising:
receiving, by a first device, a first message sent by a second device, wherein the first message comprises information used to indicate an identifier of a first SIM card of a terminal device and information used to indicate an identifier of a second SIM card of the terminal device, the first SIM card is served by the first device, and the second SIM card is served by the second device; and
sending, by the first device, a second message to a third device or the terminal device, wherein the second message is used to indicate to page the second SIM card, and the first SIM card camps on a cell of the third device.

13. The method according to claim 12, wherein the second message comprises the information used to indicate the identifier of the second SIM card, or the second message comprises the information used to indicate the identifier of the first SIM card and first indication information, and the first indication information indicates that the second message is used to page the second SIM card.

14. The method according to claim 13, wherein the second message further comprises a paging parameter of the second SIM card.

15. The method according to claim 13 or 14, wherein when the first SIM card is in an idle state, the second message further comprises a paging parameter of the first SIM card.

16. The method according to claim 12, wherein the sending, by the first device, a second message to a third device or the terminal device comprises:
when the first SIM card is in a connected state, sending, by the first device, the second message to the third device, wherein the second message comprises the information used to indicate the identifier of the first SIM card.

17. The method according to claim 12, wherein the sending, by the first device, a second message to a third device or the terminal device comprises:
when the first SIM card is in a connected state or an inactive state, sending, by the first device, the second message to the terminal device.

18. The method according to claim 16 or 17, wherein the second message further comprises the information used to indicate the identifier of the second SIM card.

19. An apparatus, configured to perform the method according to any one of claims 1 to 5.

20. An apparatus, configured to perform the method according to any one of claims 6 to 11.

21. An apparatus, configured to perform the method according to any one of claims 12 to 18.

22. An apparatus, comprising a processor, wherein the processor is coupled to a memory;
the memory is configured to store a computer program; and
the processor is configured to execute the computer program stored in the memory, to enable the apparatus to perform the method according to any one of claims 1 to 5.

23. An apparatus, comprising a processor, wherein the processor is coupled to a memory;
the memory is configured to store a computer program; and
the processor is configured to execute the computer program stored in the memory, to enable the apparatus to perform the method according to any one of claims 6 to 11.

24. An apparatus, comprising a processor, wherein the processor is coupled to a memory;
the memory is configured to store a computer program; and
the processor is configured to execute the computer program stored in the memory, to enable the apparatus to perform the method according to any one of claims 12 to 18.
